(19) Europäisches Patentamt
European Patent Office
Office européen des brevets

(11) EP 1 956 618 A1

(12) **EUROPEAN PATENT APPLICATION**
published in accordance with Art. 158(3) EPC

(43) Date of publication:
**13.08.2008 Bulletin 2008/33**

(21) Application number: **06810108.8**

(22) Date of filing: **13.09.2006**

(51) Int Cl.:
*H01G 9/025* (2006.01) *H01B 13/00* (2006.01)
*H01G 9/032* (2006.01) *H01M 8/02* (2006.01)
*H01M 8/10* (2006.01) *H01B 1/06* (2006.01)

(86) International application number:
**PCT/JP2006/318201**

(87) International publication number:
**WO 2007/040026 (12.04.2007 Gazette 2007/15)**

(84) Designated Contracting States:
**DE FR GB**

(30) Priority: **30.09.2005 JP 2005289265**
**08.08.2006 JP 2006215563**

(71) Applicants:
- **National Institute of Advanced Industrial Science and Technology**
  **Tokyo 100-8921 (JP)**
- **Nissan Motor Company Limited**
  **Kanagawa-ku**
  **Yokohama-shi, Kanagawa 221-0023 (JP)**

(72) Inventors:
- **HONDA, Kazumasa**
  **Tsukuba-shi, Ibaraki 3058565 (JP)**
- **CHIKATU, Masayuki**
  **Tsukuba-shi Ibaraki 3058565 (JP)**
- **AKIMUNE, Yoshio**
  **Tsukuba-shi Ibaraki 3058565 (JP)**
- **YAMANAKA, Mitsugu c/o NISSAN MOTORS CO., LTD**
  **Kanagawa 243-0123 (JP)**
- **UCHIYAMA, Makoto c/o NISSAN MOTORS CO., LTD**
  **Kanagawa 243-0123 (JP)**
- **HATANO, Masaharu c/o NISSAN MOTORS CO., LTD**
  **Kanagawa 243-0123 (JP)**

(74) Representative: **Goddar, Heinz J. et al**
**FORRESTER & BOEHMERT**
**Pettenkoferstrasse 20-22**
**80336 München (DE)**

# (54) METHOD FOR ACTIVATING SOLID ACID SALT, HIGH-CAPACITY CAPACITOR USING SAME, AND FUEL CELL

(57) There is provided a method for activating a solid acid salt electrolyte capable of enhancing the proton conductivity of solid acid salts at a temperature at or below a point of phase transition to the super proton conducting phase, through humidity control, by taking advantage of this phenomenon. The method for activating a solid acid salt electrolyte, comprising the steps of preparing a solid acid salt electrolyte composed of cations and anions, and forcibly keeping the surface of the solid acid salt electrolyte at humidity in a range of 10 to 100 % at temperature in a range of 10 to 80°C, whereby proton conductivity in the solid acid salt electrolyte is improved.

FIG. 2

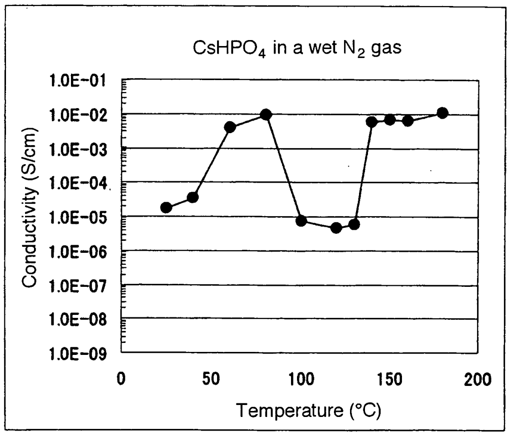


EP 1 956 618 A1

## Description

TECHNICAL FIELD

The present invention relates to activation of a solid acid salt electrolyte for use in a high-capacity capacitor, and a fuel cell, and in particular, to a method for activating a solid acid salt electrolyte, whereby proton conductivity in the solid acid salt electrolyte is improved by keeping the surface of the solid acid salt electrolyte in a high humidity atmosphere in a specified temperature range, and a high-capacity capacitor and a fuel cell, using the same.

BACKGROUND TECHNOLOGY

A fuel cell is a system for generating power through chemical reaction between hydrogen and oxygen. Since a reaction product is in principle nothing but water, expectations are rising high that the fuel cell will serve as an energy source causing the least load on the environment of the earth. Development of technologies for commercial application of the fuel cell has since become a social demand against the drop of such rise in worldwide recognition of its role, and it has been adopted as the No. 1 subject of the four important subjects listed in "Action Program for Creation of New Industries" (June, 2004), part of the new industries creation strategy promoted by Ministry of Economy, Trade, and Industry, Japan.

Important technical elements for development of the fuel cell include the development of a solid electrolyte material having high proton conductivity. Advance is presently being made mainly in research on commercial application of a solid polymer electrolyte using perfluoro sulfonic acid ion-exchange resin, but the upper limit of operating temperature is generally limited to about 80˚C owing to a problem of heat resistance, and so forth.

Meanwhile, the operating temperature of the fuel cell is regarded preferably not lower than 100˚C, particularly, not lower than 120˚C from the viewpoint of energy efficiency, utilization of waste heat, and so forth. Attention is being focused on solid acid salts represented by cesium hydrogensulfate as an electrolyte material meeting such temperature conditions as described (refer to Non-patent Document 1).

For example, structural phase transition occurs to cesium hydrogensulfate at temperature in the neighborhood 143˚C, or higher, and cesium hydrogensulfate undergoes a change into a solid phase state having a high proton conductivity, called super proton conducting phase. If the state of the super proton conducting phase is utilized in a solid electrolyte material, this will enable a fuel cell to be operated in preferable operating conditions. It has been reported that several kinds of solid acid salts besides cesium hydrogensulfate, such as triammonium hydrogendisulfate $\{(NH_4)_3 H(SO_4)_2\}$, dicesium hydrogensulfate dihydrogenphosphate $\{Cs_2 (HSO_4) (H_2PO_4)\}$, and so forth, similarly exhibit the super-proton conducting phase (refer to Non-patent Document 2, and Non-patent Document 3).

Non-patent Document 1: Nature, vol. 410, pp. 910 - 913 (2001)
Non-patent Document 2: J. Mater, Sci. Lett., vol. 16, pp. 2011 - 2016 (1981)
Non-patent Document 3: Solid State Ionics, vol. 136 - 137, pp. 229 - 241 (2000)
Non-patent Document 4: Nature, vol. 410, pp. 910 - 913 (2001)

DISCLOSURE OF THE INVENTION

However, the proton conductivity of the solid acid salt is low at a temperature at which transition to the super proton conducting phase occurs, or lower, so that it is difficult to efficiently operate the fuel cell. It follows that if a solid acid salt electrolyte fuel cell is put to use as a vehicle-mounted power source, it will be difficult to make use of the fuel cell as a power source at a temperature in the neighborhood of room temperature at the time of startup. Accordingly, in order to implement commercialization of the solid acid salt electrolyte, there is the need for development of a technology for enabling a high proton conductivity to be exhibited even at not higher than a phase transition temperature for causing the super proton conducting phase {the super proton conducting phase refers to a solid state having proton conductivity not less than$10^{-3}$ S / cm (refer to Non-patent Document 4)}.

To that end, the inventor, et al. have continued strenuous researches to review an atmosphere for solid acid salts, and as a result, found out a phenomenon that a dramatic increase occurs to the proton conductivity of cesium hydrogensulfate in a temperature range of from the neighborhood of room temperature to 80˚C in a high-humidity atmosphere. There has since been developed a technology capable of enhancing the proton conductivity of solid acid salts at, or below a point of phase transition to the super proton conducting phase, through humidity control, by taking advantage of this phenomenon.

More specifically, the invention in its one aspect provides a method for activating a solid acid salt electrolyte, comprising the steps of preparing a solid acid salt electrolyte composed of cations and anions, and forcibly keeping the surface of the solid acid salt electrolyte at humidity in a range of 10 to 100 % at temperature in a range of 10 to 80˚C, whereby proton conductivity in the solid acid salt electrolyte is improved.

The cations in the solid acid salt electrolyte may include an alkaline metal ion, an ammonium ion, and a hydrogen ion while the anions may include an anion of oxoacid.

For the solid acid salt electrolyte, use may be made of cesium hydrogensulfate ($CsHSO_4$) or cesium dyhydrogenphosphate ($CsH_2PO_4$).

Further, the invention in its another aspect provides a high-capacity capacitor comprising a solid acid salt electrolyte composed of cations and anions, in solid state at normal temperature, wherein proton conductivity in the solid acid salt electrolyte is improved by forcibly keeping the surface of the solid acid salt electrolyte at humidity in a range of 10 to 100 % at temperature in a range of 10 to 80˚C.

With the high-capacity capacitor, for the solid acid salt electrolyte, use may be made of cesium hydrogensulfate ($CsHSO_4$) or cesium dyhydrogenphosphate ($CsH_2PO_4$).

Further, a moisture-holding material is preferably placed close to the solid acid salt electrolyte of the high-capacity capacitor.

Still further, the invention in its still another aspect provides a fuel cell comprising a solid acid salt electrolyte composed of cations and anions, wherein proton conductivity in the solid acid salt electrolyte is improved by forcibly keeping the surface of the solid acid salt electrolyte at humidity in a range of 10 to 100 % at temperature in a range of 10 to 80˚C.

Further, with the fuel cell, for the solid acid salt electrolyte, use may be made of cesium hydrogensulfate ($CsHSO_4$) or cesium dyhydrogenphosphate ($CsH_2PO_4$). Still further, a moisture-holding material is preferably placed close to the solid acid salt electrolyte of the fuel cell.

With the use of the method for activating the solid acid salt electrolyte according to the invention, it is possible to dramatically enhance power generation performances of a high-capacity capacitor of a type using the solid acid salt electrolyte, and a fuel cell of a type using the solid acid salt electrolyte, respectively.

BREIF DESCRIPTION OF THE DRAWINGS

Fig. 1 shows a schematic illustration of a system for controlling an aqueous vapor atmosphere and temperature for a solid acid salt electrolyte material, and measuring proton conductivity;
Fig. 2 is a graph showing temperature-dependent variation in electric conductivity of a $CsHSO_4$ pellet in a wet $N_2$ gas;
Fig. 3 is a graph showing temperature-dependent variation in electric conductivity of a $CsHSO_4$ pellet in a dry $N_2$ gas;
Fig. 4 is a graph showing variation in conductivity of a $CsHSO_4$ pellet kept at 70˚C, against relative humidity;
Fig. 5 is a graph showing temperature-dependent variation in electric conductivity of a $CsH_2PO_4$ pellet (No. 01) in a dry $N_2$ gas;
Fig. 6 is a graph showing temperature-dependent variation in electric conductivity of the $CsH_2PO_4$ pellet (No. 01 - No. 02) in a dry $N_2$ gas (first rise in temperature);
Fig. 7 is a graph showing temperature-dependent variation in electric conductivity of the $CsH_2PO_4$ pellets (No. 01 - No. 02) in a dry $N_2$ gas (second rise in temperature);
Fig. 8 is a graph showing temperature-dependent variation in electric conductivity of the $CsH_2PO_4$ pellets (No. 01 - No. 02) in a dry $N_2$ gas (third rise in temperature);
Fig. 9 is a graph showing temperature-dependent variation in electric conductivity of a $CsH_2PO_4$ pellet (No. 03) in a wet $N_2$ gas; and
Fig. 10 is a graph showing variation in conductivity of a $CsH_2PO_4$ pellet (No. 04) kept at 70˚C, against relative humidity.

BEST MODE FOR CARRYING OUT THE INVENTION

Solid acid salt electrolytes for use in carrying out the invention are made of inorganic solid acid salts including the following:

The inorganic solid acid salts can be expressed by a composition formula $M_xH_y(XO_n)_z$. M refers to a cation. M is mainly a metal ion such as $K^+$, $Cs^{2+}$, $Rb^{2+}$, and so forth, and may be $(NH_4)^+$ or $(H_3O)^+$. Further, H may be hydrogen (ion). An anion may typically include an anion $(XO_n)^2$ of oxoacid. Further, $(SO_4)^{2-}$, $(PO_4)^{3-}$, $(SeO_4)^{2-}$, $(ClO_4)^-$, and so forth are included. Examples in which proton conduction is reported include numerous species such as $CsH_2PO_4$, $KH_2PO_4$, $KHSO_4$, $NH_4HSO_4$, $RbHSO_4$, $CsHSeO_4$, $Rb_3H(SeO_4)_2$, $(NH_4)_3H(SO_4)_2$, $K_3H(SO_4)_2$, $H_3OClO_4$, and so forth, besides $CsHSO_4$. Further, there are also included a mixed acid type species containing not less than two kinds of anions, of which $Cs_2(HSO_4)(H_2PO_4)$, and $Cs_3(HSO_4)_2[H_{2-x}(P1_{-x}S_x)O_4]$ are well known.

A solid acid salt electrolyte is placed in a vessel capable of high moistening by controlling humidity to be thereby exposed to an aqueous vapor atmosphere. Otherwise, a gas containing aqueous vapor in high concentration is fed into a solid acid salt electrolyte with humidity kept under control.

With the present invention, the temperature of the solid acid salt electrolyte is kept in a range of 10 to 80˚C, and this is because it has turned out that the absolute magnitude of moisture is too small at 10˚ C or lower while it is difficult to generate high humidity at 80˚ C or higher although it does not mean that an advantageous effect of the present invention will be totally lost if the temperature is outside the range.

Further, with the present invention, it is required that the humidity of the surface of the solid acid salt electrolyte is forcibly kept in the range of 10 to 100 %, and the advantageous effect is not obtained with the humidity below 10% while there will be no change in the advantageous effect even if the humidity is higher than 100 %. Any moistening apparatus may be used provided that the humidity can be forcibly kept in the range of 10 to 100 %, and typically, a humidity generator (trade name: Rigaku HUM - 1), and so forth can be utilized.

Further, the method for activating the solid acid salt electrolyte according to the present invention for improving the proton conductivity in the solid acid salt electrolyte, is applicable as it is to an electrolyte of a conventional high-capacity capacitor and a conventional fuel cell, thereby enabling respective properties of the high-capacity capacitor, and the fuel cell to be enhanced.

Further, the moisture-holding material for use in carrying out the present invention may be any material capable of holding moisture, either inorganic or organic, and an inorganic material includes zeolite, FSM-16 that is a kind of mesoporous material, activated charcoal, silica gel, and so forth while an organic material typically includes sodium polyacrylate.

Embodiment 1

The present invention is described hereinafter in greater detail with reference to embodiments of the invention, but it is to be pointed out that present invention is not limited thereto.

(Working Example)

A pellet was produced by putting 0.5 to 2.0g of commercially available cesium hydrogensulfate powders in a piston-cylinder shaped mold to be thereby provisionally compressed with a hand-controlled hydraulic press, and to be subsequently compressed at a pressure in a range of 200 to 600 MPa with a hydrostatic press, or the hand-controlled hydraulic press for several tens of minutes. After polishing the surface of the pellet with sandpaper, electrically conductive silver paste (trade name: Fugikura Kasei Dotite; D - 500) to serve as electrodes was applied to the surface. Because the sample has moisture absorbability, work was carried out inside a glove-bag into which a dried nitrogen gas was fed. The sample pellet was clamped in a sample holder using a platinum mesh. The reason for use of the mesh was to permit a wet gas to permeate up to the sample pellet. For a lead wire as well, use was made of platinum, and for the mesh holder and a lead cover, use was made of ceramics for the purpose of heat resistance. Further, tightening screws made of plastics were used so as not to affect impedance measurement. The sample pellet clamped in the sample holder was put in an oven (trade name: AS ONE DO - 300 FPA) capable of temperature control, and AC impedance measurement was conducted with the use of an LCR meter (Hioki Electric 3522, LCR Hitester) while controlling temperature of the sample. AC conductivity data called a complex impedance plot was obtained by frequency sweep measurement. In order to generate a wet atmosphere, a wet nitrogen gas was generated with the use of a humidity generator (Rigaku HUM - 1) and the gas was then introduced into the oven to thereby control atmosphere. A system is capable of supplying a gas with relative humidity controlled in a range of 10 to 90RH % at a temperature in a range of from room temperature to 70˚C. However, it was found difficult to generate a high humidity gas at a temperature as high as 80˚C or higher. Fig. 1 shows a schematic illustration of the system in whole.

Embodiment 2

(electric conductivity measurement in a wet nitrogen gas atmosphere)

A wet $N_2$ gas generated by use of the humidity generator was guided into a sample room to thereby conduct measurement on conductivity variation. A sample pellet had dimensions 8.1 mm in diameter, 3.4 mm in thickness, and 86 $mm^2$ in side area. The temperature of the sample was varied in a range of 60 to 180˚C in stages so as to sequentially change from 60 → 80 → 100 → 120 → 130 → 140 → 150 → 160 → 180˚C, and the final temperature of the sample was measured 40˚C at room temperature of 25˚C. Humidity was measured with a thermocouple sensor placed in the vicinity of the sample. The wet nitrogen gas had a flow rate in a range of 230 to 240 ml/min. The temperature of a water tank in the humidity generator for causing the dry $N_2$ gas to bubble to be thereby wetted was varied according to the temperature of the sample, and the temperature of the water tank was kept at 35˚C, 50˚C, and 70˚C with the temperature of the sample at 25˚C, and 40˚C, and in the range of 60 to 180˚C, respectively. The results of measurements on electric conductivity are shown in Fig. 2.

Electric conductivity σ [S/cm] was found from a resistance value R [W] of the sample obtained from the real axis interception of a complex impedance plot by use of the following formula

$$\sigma = (R \times A / L)^{-1}$$

where A = cross-sectional area of the sample, L = thickness of the sample

- The conductivity was found to significantly increase in a range of from room temperature to 80˚C as compared with the case of a dry atmosphere.
- The conductivity value in a range of 60 to 80˚C, in particular, was found to match the conductivity of the super proton conducting phase at high humidity.
- The conductivity even in a range of 100 to 140˚C was found obviously high in spite of a low relative humidity.
- On the other hand, much difference in the conductivity was not observed at 150˚C or higher.
  This is presumably because effects of moisture in the gas on the sample are small due to the low relative humidity of the atmospheric gas.
- A phase transition temperature to the super proton conducting phase was in a range of 140 to 150˚C in a dry atmosphere, but the same was found to fall in a range of 130 to 140˚C according to the results of measurement in a wet atmosphere, so that obvious difference was observed therebetween.
  For the sake of comparison, the results of measurement on electric conductivity in a dry $N_2$ gas atmosphere are shown in Fig. 3.

Embodiment 3

The temperature of a sample was kept at 70˚C, and the conductivity of the sample was measured by varying relative humidity. A sample pellet had dimensions 14.8 mm in diameter, and 1.9 mm in thickness. The relative humidity was varied in stages so as to sequentially change from 0 → 10 → 30 → 50 → 70 → 80%. The relative humidity indicates actually measured values as measured with the sensor placed in the vicinity of the sample. The results of measurements are shown in Fig. 4.

It was confirmed that as the relative humidity increases, so the conductivity steeply increases. The results of the measurement indicate that the conductivity against the relative humidity at 70% or 80 % was higher by six orders of magnitude as compared with that in the case of the dry atmosphere, being comparable to the conductivity in the super proton conducting phase exhibiting itself at not lower than 143˚C.

Further, for reference, in Table 1, there is shown- the specification of the humidity generator (HUM - 1) that was used in the measurements.

Table 1

| | |
|---|---|
| (1) | water tank: made of SUS, inner volume about 300 ml |
| (2) | water temperature: room temperature to 70˚C at max. |
| (3) | transfer tube: about 80 cm in full length, kept at working temperature of 80˚C at max. |
| (4) | temperature · humidity sensor: capacitance type, max working temperature at about 100˚C calibration accuracy: humidity ±1.5% RH(10 to 95% RH) temperature ± 0.3˚C |
| (5) | mass flow controller: one unit each for a dry gas, and a wet gas (gas for bubbling in the water tank) max flow rate; 500 ml/min for the dry gas, 200 ml/min for the wet gas |
| (6) | humidity control method: PID control method A mixing ratio of the dry gas to the wet gas is adjusted by control of the mass flow controller |

(continued)

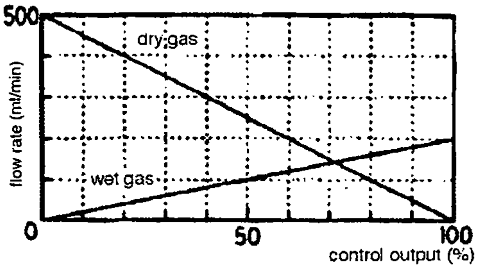


(7) humidity range of a generated gas: 5 to 95 % RH at room temperature (25˚C) 10 to 95 % RH in a range of 25 to 40˚C 10 to 90 % RH in a range of 41 to 60˚C

(8) humidity stability: within ± 2 % RH (the case of a predetermined amount of water remaining in the water tank) after reaching a set value of humidity

(9) external dimensions of the humidity generator: about 28.5 W x 35.0 D x 32.0 H

(10) utilities: necessary power supply; AC 100 V (± 10 %), 5A water; pure water or ion-exchanged water gas; use of a dry nitrogen gas supplied from a gas cylinder is required. After reducing a pressure to about 0.03 MPa, please supply the gas such that a pipe 6 mm in outer diameter is connectable

(11) environmental conditions: temperature; in a range of 15 to 30˚C (variation within ± 2˚C) humidity; in a range of 40 to 70 % RH (no condensation permissible)

Next, there is described a specific example of measurement on electric conductivity of cesium dyhydrogen-phosphate ($CsH_2PO_4$). In this case, a method for preparation of the sample, and a method for the measurement are substantially the same as those for $CsHSO_4$, however, in the case of $CsH_2PO_4$, a phase transition temperature to the super proton conducting phase is 230˚C, which is higher than 143˚C in the case of $CsHSO_4$, so that the measurement was conducted by expanding a range of measurement temperature up to 270˚C.

Embodiment 4

{Preparation of a sample of cesium dyhydrogen phosphate ($CsH_2PO_4$)}

For preparation of the sample of cesium dyhydrogen phosphate ($CsH_2PO_4$), use was made of reagent powders (purity: not less than 99 %) manufactured by Mitsuwa Chemicals Co., Ltd. Powders of cesium dyhydrogen phosphate ($CsH_2PO_4$) were compressed at a pressure of 6 ton/cm$^2$ (590 MPa) with a hand-controlled hydraulic press to thereby prepare a $CsH_2PO_4$ pellet (No. 01) 8.1 mm in diameter, 3.3 mm in thickness, and 83 mm$^2$ in side area. The silver paste (Fugikura Kasei Dotite; D - 500) was applied to the top and bottom surfaces of the pellet to serve as electrodes.

(measurement of electric conductivity in a dry nitrogen gas atmosphere)

The measurement was conducted on electric conductivity of cesium dyhydrogen phosphate ($CsH_2PO_4$) pellet in a range of from room temperature to 270˚C in a dry atmosphere.

A dry $N_2$ gas was introduced into the sample room at a flow rate of 500 ml/min to thereby prepare a measurement atmosphere. A measurement temperature was in the range of from room temperature to 270˚C, and the conductivity was measured only in a heat-up process. The measurement temperature was varied so as to change in stages from room temperature → 50 → 80 → 110 → 140 → 160 → 180 → 200 → 220 → 230 → 250 → 270˚C, and after setting the measurement temperature to respective target temperatures, the measurement temperature was held for 10 to 40 minutes, thereby conducting measurement on AC impedance after checking stabilization of impedance values. The same heat-up measurement using each of the sample pellets identical to each other was repeated three times. The results of the heat-up measurements are summed up in Fig. 5.

As is evident from the results of the respective measurements at first and second rises in temperature, a steep increase in electric conductivity is observed at a temperature between 220˚C and 230˚C. Presumably, this is due to an increase in the conductivity because $CsH_2PO_4$ is turned into the super proton conducting phase owing to phase transition at 230˚C or higher. Upon comparison of the measurements at the respective rises with each other, it is obvious that the electric conductivity as a whole falls from the first rise toward the second and third rises, respectively. Furthermore, it is

shown that while a jump in the conductivity before or after the phase transition in the case of the first rise was about two orders of magnitude higher as compared with a jump in the conductivity at the second rise, the jump in the conductivity at the second rise was found smaller in magnitude, and furthermore, an increase in the conductivity at the third rise was not so much as what can be called the jump. It is presumed that occurrence of such variation in the conductivity every time the heat-up measurement was repeated is because $CsH_2PO_4$ in the pellet underwent dehydration decomposition due to the rise in temperature in the dry atmosphere.

According to a reference literature, $CsH_2PO_4$ undergoes dehydration reaction as follows:

$$CsH_2PO_4 \rightarrow CsPO_3 + H_2O\ (g)$$

It is presumed that part of $CsH_2PO_4$ at the second rise in temperature underwent dehydration decomposition due to the rise in temperature, and drying, occurring thereto up until then, resulting in alteration, so that the conductivity as a whole decreased, and a larger proportion of $CsH_2PO_4$ at the third rise in temperature underwent alteration, so that occurrence of the jump in the conductivity at the phase transition was no longer observed.

Embodiment 5

{Preparation of a sample of cesium dyhydrogen phosphate ($CsH_2PO_4$) with Kapton film stuck thereto}

It has turned out on the basis of the results of the measurements on the $CsH_2PO_4$ pellet (No. 01) according to Embodiment 4 that there is a possibility of $CsH_2PO_4$ having undergone dehydration decomposition due to the rise in temperature up to 270˚C, taking place three times in the dry atmosphere. Another sample pellet No. 02 (8.1 mm in diameter, 3.4 m in thickness, and 86 $mm^2$ in side area) with a Kapton film stuck to the side face thereof, coming in contact with the atmosphere, was prepared.

(measurement of electric conductivity in a dry nitrogen gas atmosphere)

As is the case with Embodiment 4, measurement was conducted on electric conductivity of the sample pellet in a dry $N_2$ gas atmosphere.

A dry $N_2$ gas was fed at the flow rate of 500 ml/min during the measurement. A measurement temperature was in a range of 50 to 270˚C, and only a rise in temperature was measured. In this case as well, the same heat-up measurement was repeated three times. In Figs. 6 to 8, results of the measurements on the conductivity, conducted on the pellets No. 01, and No. 02, respectively, are plotted.

Observation was carried out on the pellet No. 02 after the measurement in the dry atmosphere. An overlapped portion of the Kapton film stuck to the side face of the pellet, extending beyond the end of one circle of the film, around the side face, was found peeled off probably due to thermal expansion of the pellet. A portion of the side face, corresponding to the overlapped portion of the Kapton film, was found discolored with pits and projections occurring thereto, as in the case of the pellet No. 01 after the heat-up measurement, indicating a possibility of the portion of the side face having been directly subjected to the effects of the dry $N_2$ gas. In contrast, the other portion of the side face was found less discolored with fewer pits and projections occurring thereto.

With the pellet No. 02 as well, there was seen a tendency that the electric conductivity as a whole decreased as count of the rises in temperature was increased as is the case with the pellet No. 01, and as to the electric conductivity at the phase transition temperature or lower, there was not found much difference in the results of the second and third rises between the pellet No. 01, and the pellet No. 02. However, while with the pellet No. 01, the jump in the conductivity upon the phase transition at the second rise became obviously smaller in magnitude as compared that at the first rise, it is shown that even at the second rise, the pellet No. 02 had a jump in the conductivity about two orders of magnitude higher than that before the phase transition, equivalent to that for the first rise. Although in the case of the pellet No. 02, a jump in the conductivity upon the phase transition at the third rise was found as small as one order of magnitude, the pellet No. 02 obviously differs from the pellet No. 01 in respect of the results of the measurement if it is taken into consideration that the jump in the conductivity was not observed at the third rise in the case of the pellet No. 01.

This difference in the results of the measurement between the pellet No. 01, and the pellet No. 02 is deemed to be attributable to a difference in dehydration decomposition rate of $CsH_2PO_4$. It is further deemed that the reason for this is because the Kapton film wound around the side face of the pellet prevented the side face from coming into direct contact with the dry atmosphere to thereby curb moisture desorption due to the rise in temperature, resulting in an increase in proportion of remaining $CsH_2PO_4$. It appears that protection of the side face of the pellet, otherwise coming into contact with the atmosphere, by some method, will provide effective means for delaying degradation of $CsH_2PO_4$.

Embodiment 6

{Preparation of a sample of cesium dyhydrogen phosphate ($CsH_2PO_4$)}

A $CsH_2PO_4$ pellet (No. 03) 8.1 mm in diameter, 3.35 mm in thickness, and 86 $mm^2$ in side area was prepared, and the silver paste was applied to the top and bottom surfaces of the pellet to serve as electrodes.

Subsequently, electric conductivity in a wet atmosphere was measured. As in the case of $CsHSO_4$, enhancement in the conductivity of the pellet (No. 03) in a room temperature phase, enhancement in the conductivity thereof, in the neighborhood of room temperature, in particular, was highly hoped for. A wet $N_2$ gas generated with the use of the humidity generator (Rigaku HUM - 1), containing saturated aqueous vapor at 70˚C, was guided into a sample room (flow rate: 220 ml/min), and a measurement temperature was in a range of 50 to 270˚C, and the conductivity was measured only in a heat-up process. The same heat-up measurement was repeated three times. The results of the measurements with respective rises are summed up and shown in Fig. 9.

As is evident when compared with Fig. 5, an increase in the conductivity is observed in a range of from 50˚C to the neighborhood of 160˚C. The conductivity increased by not less than four orders of magnitude in a range of from 50˚C to 80˚C, in particular.

It is deemed that the dehydration decomposition of $CsH_2PO_4$ already started at a second rise in temperature in view of the fact that the conductivity as a whole kept falling in the case of the heat-up measurement in the dry atmosphere. In contrast, the conductivity did not significantly fall even at a third rise in temperature in the case of the heat-up measurement in the wet atmosphere, exhibiting a behavior substantially similar to that at earlier rises. This is presumably due to the fact that dehydration decomposition hardly occurred to $CsH_2PO_4$ even at high temperature because moisture was kept supplied by the wet gas.

Embodiment 7

{Preparation of a sample of cesium dyhydrogen phosphate ($CsH_2PO_4$)}

A $CsH_2PO_4$ pellet (No. 04) 8.1 mm in diameter, 3.4 mm in thickness, and 86 $mm^2$ in side area was prepared, and the silver paste was applied to the top and bottom surfaces of the pellet to serve as electrodes. (electric conductivity measurement in a wet nitrogen gas atmosphere: variation in relative humidity at 70˚C)

A measurement was conducted on the electric conductivity of the $CsH_2PO_4$ pellet in the case of varying relative humidity at a constant temperature. The temperature of the pellet was held at 70˚C, and humidity of an $N_2$ gas serving as a sample gas was controlled by the humidity generator (Riau HUM - 1) (flow rate from 200 to 500 ml/min). The relative humidity was varied in stages so as to sequentially change from 0 $\rightarrow$ 10 $\rightarrow$ 30 $\rightarrow$ 50 $\rightarrow$ 70 $\rightarrow$ 80 %. The sample was held at respective humidities for 60 to 90 minutes, and the conductivity was measured every 30 minutes.

The last measured values of conductivity measured at the respective humidities were plotted. The same measurement with variation in relative humidity was conducted on one of sample pellets identical to each other to be repeated for 3 days. The sample pellet was kept in a dry $N_2$ gas at night. Further, after the pellet was left in a desicator for about 20 days, a fourth measurement with variation in relative humidity was conducted. The results of those measurements are shown in Fig. 10.

When the results of the respective measurements with variation in relative humidity are compared with each other in Fig. 10, it is evident that as the relative humidity increases, so did the electric conductivity up to a value close to $10^{-3}$ S / cm at humidity 80 % for every variation (4 times) in the humidity.

Further, the conductivity on a lower humidity side was found gradually increasing at every measurement up to a third variation in the humidity. Every time one measurement with variation in relative humidity was completed, temperature was brought back to room temperature, and the pellet was left in a dry state by allowing the dry $N_2$ gas to flow thereto at night, however, there is a possibility that the pellet was not fully dried because a flow rate of the dry $N_2$ gas was low.

Accordingly, after placing the pellet in the desicator in a dry state at room temperature for about 20 days, the fourth measurement with variation in relative humidity was conducted. The conductivity on the lower humidity side was found lower by an order of magnitude as compared with that in the case of a third measurement. This is presumably due to the sample pellet being dried. However, the conductivity did not decrease as low as an initial value thereof, prior to the variation in the humidity. It seems that the $CsH_2PO_4$ pellet that was once wetted was not fully dried with ease if placed in a dry atmosphere at room temperature. Further, the conductivity at 80 % in humidity at the fourth measurement seems slightly lower than that for each of the first to the third measurements.

Upon observation of the sample pellet after the respective measurements with variation in relative humidity in the wet atmosphere, it was found out that the side face of the pellet appeared to have slightly more asperities as compared with that prior to the measurement, but was found substantially keeping a cylinder-like shape held prior to the measurement without conspicuous pits and projections, formed thereon. As far as the results of the observation on the pellet that was exposed to the wet atmosphere for about 26 hours in total, stability of $CsH_2PO_4$ in the wet atmosphere appears relatively high.

In the light of the fact that a fairly high proportion of $CsH_2PO_4$ undergoes dehydration decomposition upon the rise in temperature, taking place only several times, during the measurement in the dry atmosphere, it is deemed that endurance against dehydration decomposition at a high temperature is enhanced by supply of moisture.

Furthermore, by overall judgment on the basis of those results, it is possible to confirm that a degree of moisture will remain only if forcible-removal of moisture in the desicator is dispensed with, and it has turned out that only if a moisture-holding material is placed close to the pellet, the electric conductivity of $CsHSO_4$ or $CsH_2PO_4$ will increase due to supply of moisture from the moisture-holding material even though a wet gas is not directly supplied.

INDUSTRIAL APPLICABILITY

The technologies for commercial application of the fuel cell employing the solid acid salt electrolyte can be provided by combining the fuel cell with an adequate moistening system. At the time of starting up the fuel cell, a high proton conductivity can be exhibited with assistance by the moistening system, thereby causing a cell reaction to efficiently proceed. After the start of the reaction, the electrolyte is moistened with heat of the reaction, thereby enabling transition to the super proton conducting phase to spontaneously occur, so that it becomes possible to operate the fuel cell in a temperature range that is high in energy efficiency, and utilization of waste heat. Thus, the technologies have a high industrial utility value.

## Claims

1. A method for activating a solid acid salt electrolyte, comprising the steps of preparing a solid acid salt electrolyte composed of cations and anions, and forcibly keeping the surface of the solid acid salt electrolyte at humidity in a range of 10 to 100 % at temperature in a range of 10 to 80˚C, whereby proton conductivity in the solid acid salt electrolyte is improved.

2. The method for activating a solid acid salt electrolyte according to Claim 1, wherein the cations in the solid acid salt electrolyte includes an alkaline metal ion, an ammonium ion, and a hydrogen ion while the anions includes an anion of oxoacid.

3. The method for activating a solid acid salt electrolyte according to Claim 1, wherein the solid acid salt electrolyte is made of cesium hydrogensulfate ($CsHSO_4$) or cesium dyhydrogenphosphate ($CsH_2PO_4$).

4. A high-capacity capacitor comprising a solid acid salt electrolyte composed of cations and anions, in solid state at normal temperature, wherein proton conductivity in the solid acid salt electrolyte is improved by forcibly keeping the surface of the solid acid salt electrolyte at humidity in a range of 10 to 100 % at temperature in a range of 10 to 80˚C.

5. The high-capacity capacitor according to Claim 4, wherein the solid acid salt electrolyte is made of cesium hydrogensulfate ($CsHSO_4$) or cesium dyhydrogenphosphate ($CsH_2PO_4$).

6. The high-capacity capacitor according to Claim 4 or 5, wherein a moisture-holding material is placed close to the solid acid salt electrolyte of the high-capacity capacitor.

7. A fuel cell comprising a solid acid salt electrolyte composed of cations and anions, wherein proton conductivity in the solid acid salt electrolyte is improved by forcibly keeping the surface of the solid acid salt electrolyte at humidity in a range of 10 to 100 % at temperature in a range of 10 to 80˚C.

8. The fuel cell according to Claim 7, wherein the solid acid salt electrolyte is made of cesium hydrogensulfate ($CsHSO_4$) or cesium dyhydrogenphosphate ($CsH_2PO_4$).

9. The fuel cell according to Claim 7 or 8, wherein a moisture-holding material is placed close to the solid acid salt electrolyte of the fuel cell.

# FIG. 1

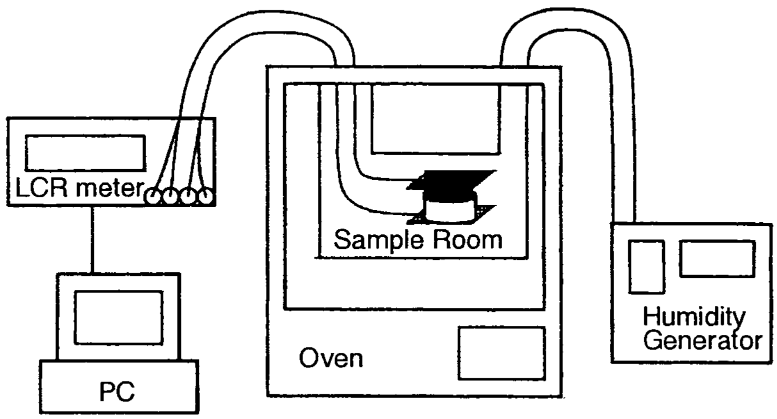
LCR meter
Sample Room
Oven
PC
Humidity Generator

# FIG. 2

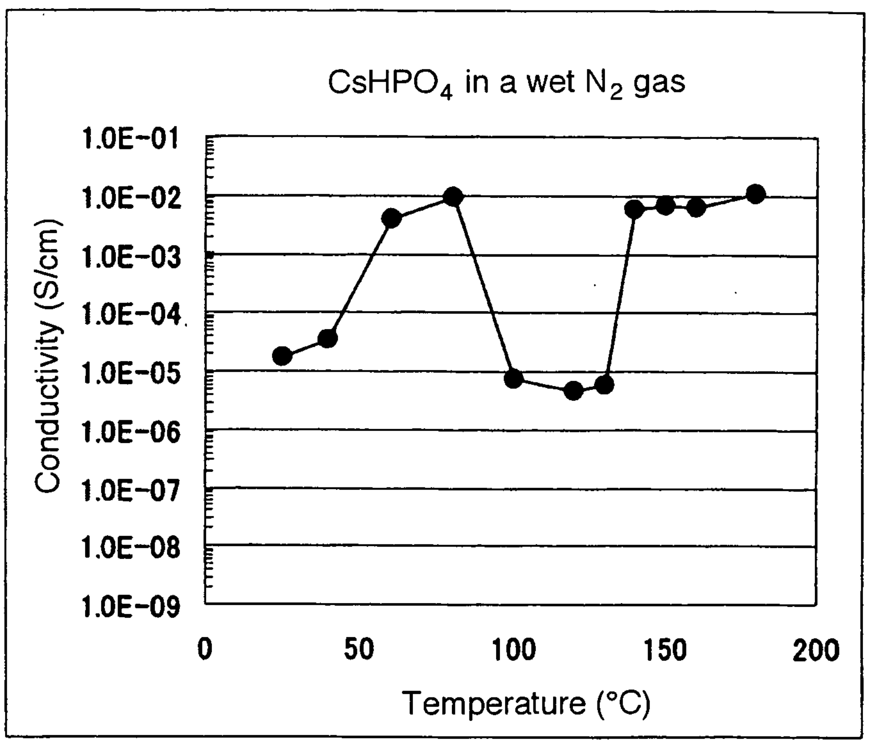
$CsHPO_4$ in a wet $N_2$ gas
1.0E-01
1.0E-02
1.0E-03
1.0E-04
1.0E-05
1.0E-06
1.0E-07
1.0E-08
1.0E-09
Conductivity (S/cm)
0
50
100
150
200
Temperature (°C)

FIG. 3

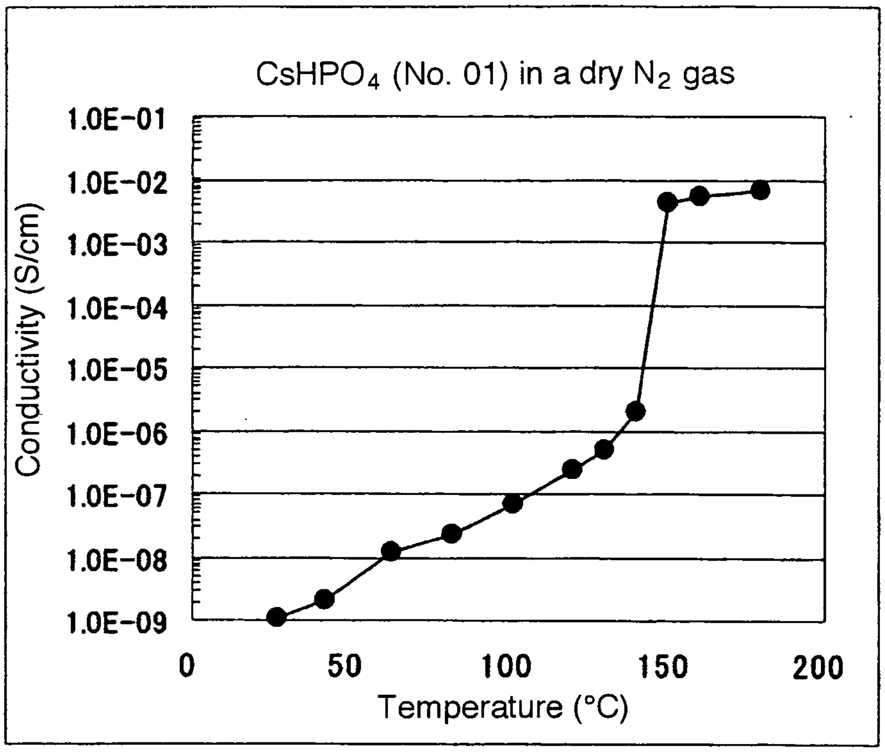

CsHPO4 (No. 01) in a dry N2 gas
Conductivity (S/cm)
1.0E-01
1.0E-02
1.0E-03
1.0E-04
1.0E-05
1.0E-06
1.0E-07
1.0E-08
1.0E-09
0
50
100
150
200
Temperature (°C)


FIG. 4

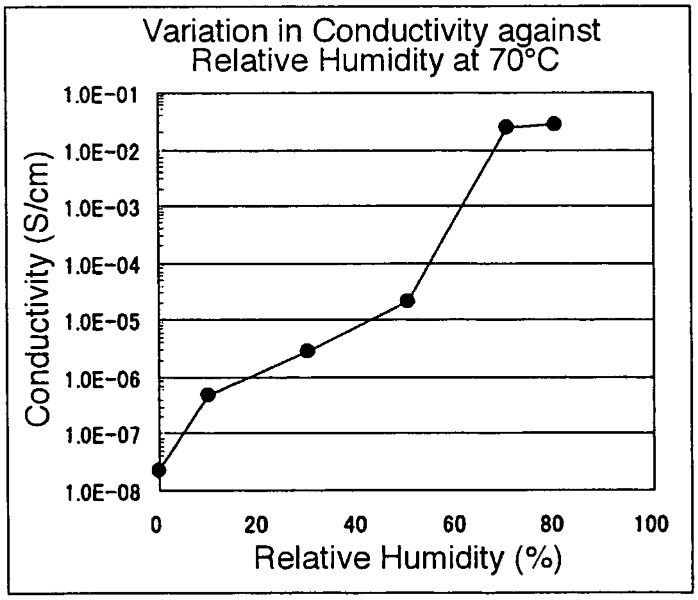

Variation in Conductivity against Relative Humidity at 70°C
Conductivity (S/cm)
1.0E-01
1.0E-02
1.0E-03
1.0E-04
1.0E-05
1.0E-06
1.0E-07
1.0E-08
0
20
40
60
80
100
Relative Humidity (%)

FIG. 5

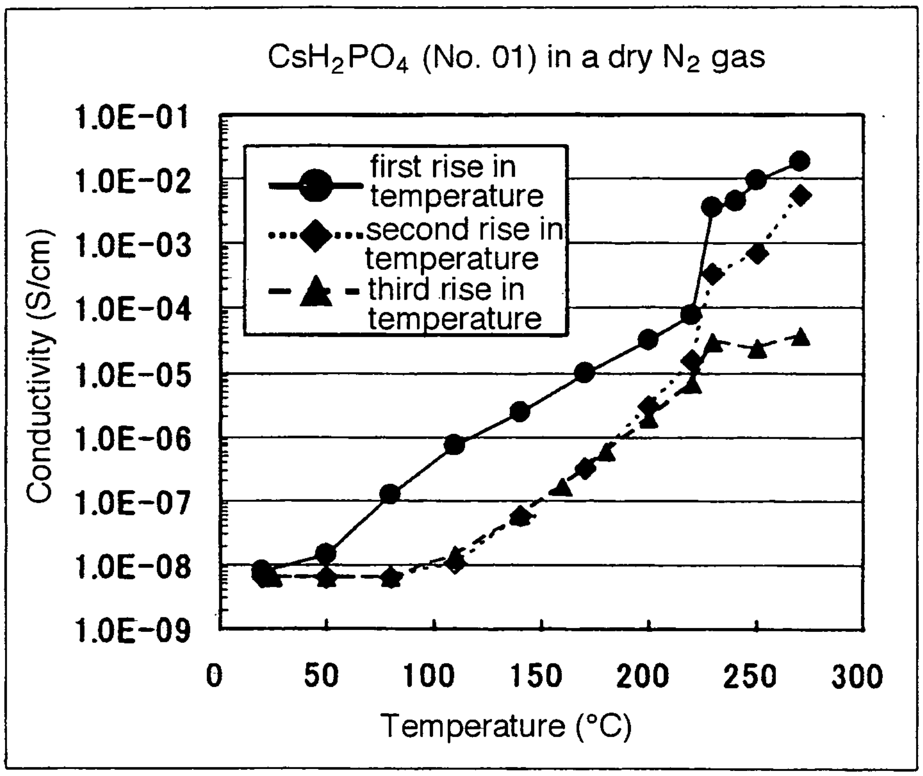
CsH2PO4 (No. 01) in a dry N2 gas
1.0E-01
1.0E-02
1.0E-03
1.0E-04
1.0E-05
1.0E-06
1.0E-07
1.0E-08
1.0E-09
Conductivity (S/cm)
first rise in temperature
second rise in temperature
third rise in temperature
0
50
100
150
200
250
300
Temperature (°C)

FIG. 6

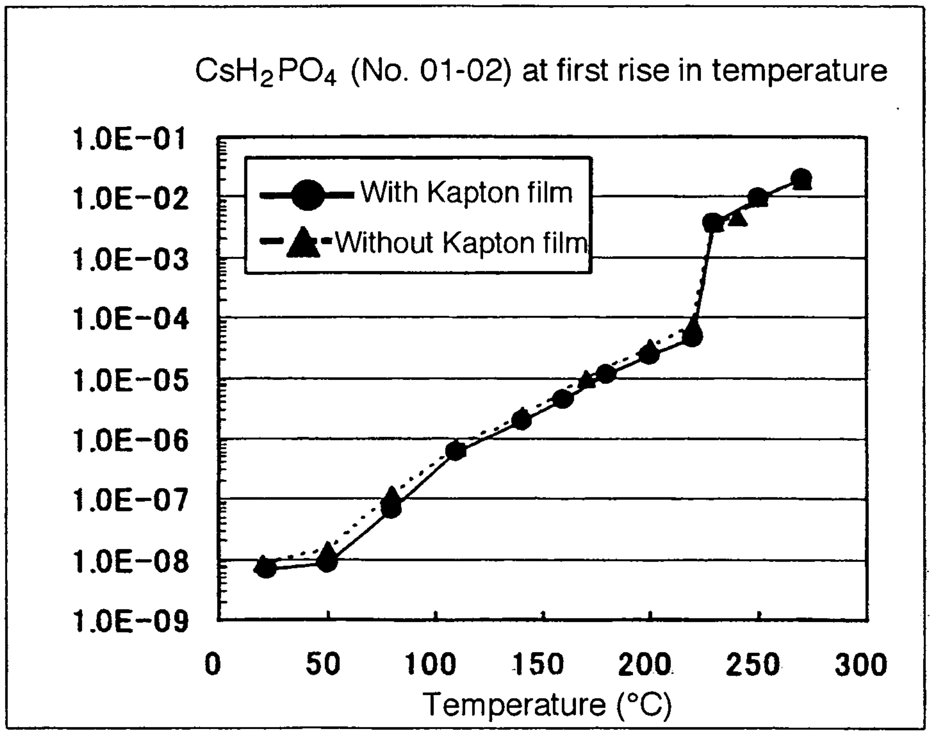
CsH2PO4 (No. 01-02) at first rise in temperature
With Kapton film
Without Kapton film
1.0E-01
1.0E-02
1.0E-03
1.0E-04
1.0E-05
1.0E-06
1.0E-07
1.0E-08
1.0E-09
0
50
100
150
200
250
300
Temperature (°C)

FIG. 7

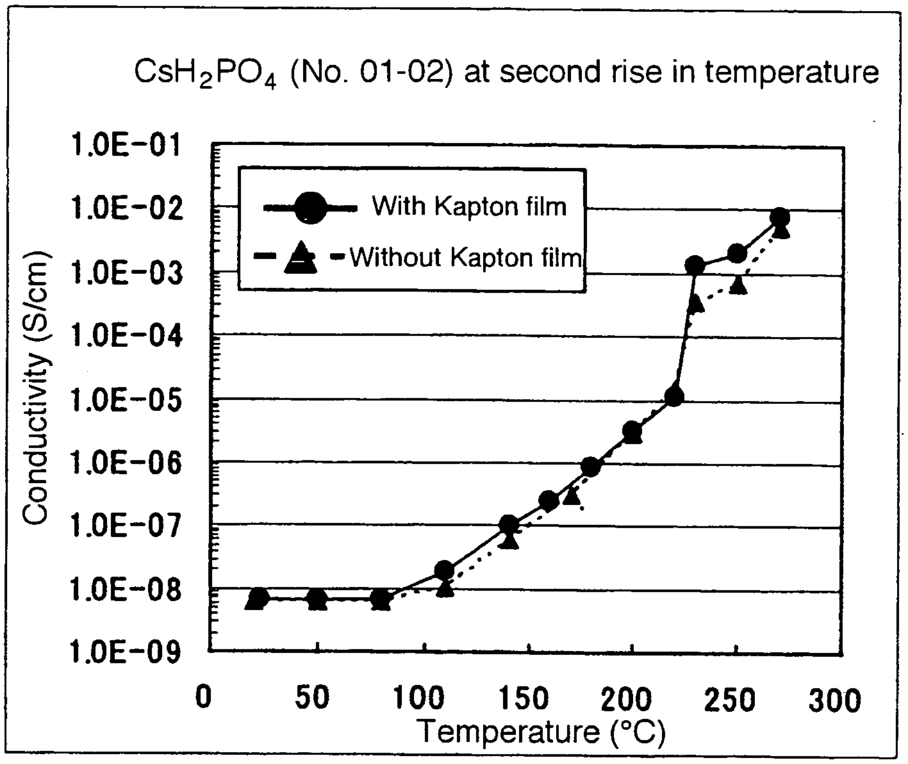

$CsH_2PO_4$ (No. 01-02) at second rise in temperature
With Kapton film
Without Kapton film
Conductivity (S/cm)
1.0E-01
1.0E-02
1.0E-03
1.0E-04
1.0E-05
1.0E-06
1.0E-07
1.0E-08
1.0E-09
0
50
100
150
200
250
300
Temperature (°C)


FIG. 8

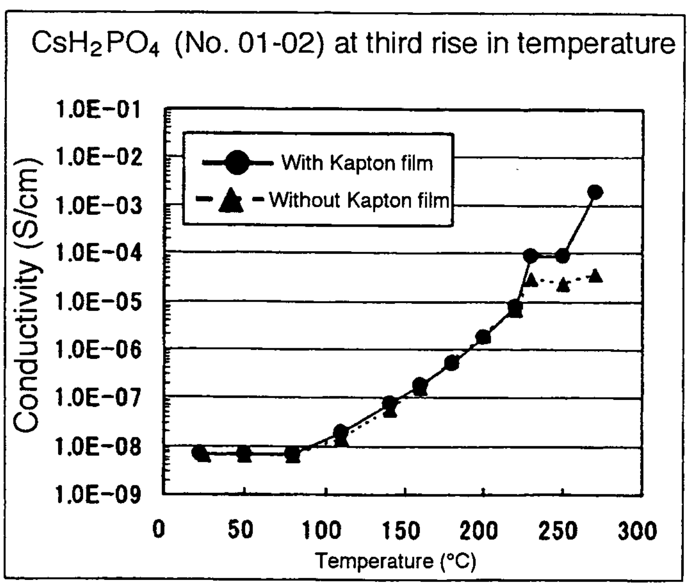

$CsH_2PO_4$ (No. 01-02) at third rise in temperature
With Kapton film
Without Kapton film
Conductivity (S/cm)
1.0E-01
1.0E-02
1.0E-03
1.0E-04
1.0E-05
1.0E-06
1.0E-07
1.0E-08
1.0E-09
0
50
100
150
200
250
300
Temperature (°C)

# FIG. 9

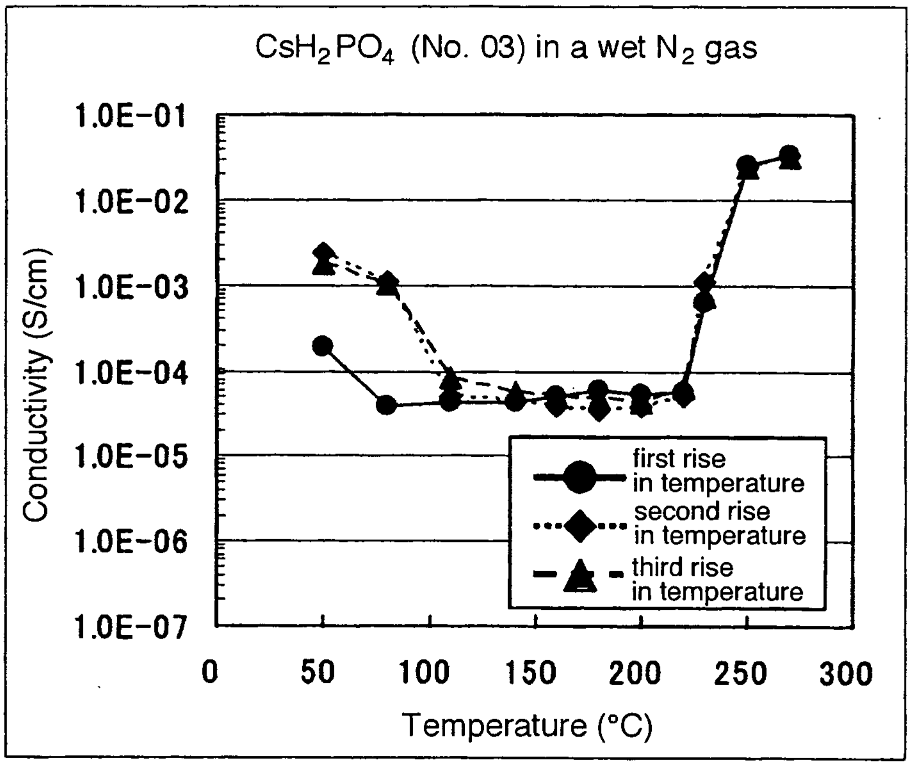
CsH2PO4 (No. 03) in a wet N2 gas
1.0E-01
1.0E-02
1.0E-03
1.0E-04
1.0E-05
1.0E-06
1.0E-07
Conductivity (S/cm)
0
50
100
150
200
250
300
Temperature (°C)
first rise in temperature
second rise in temperature
third rise in temperature

FIG. 10

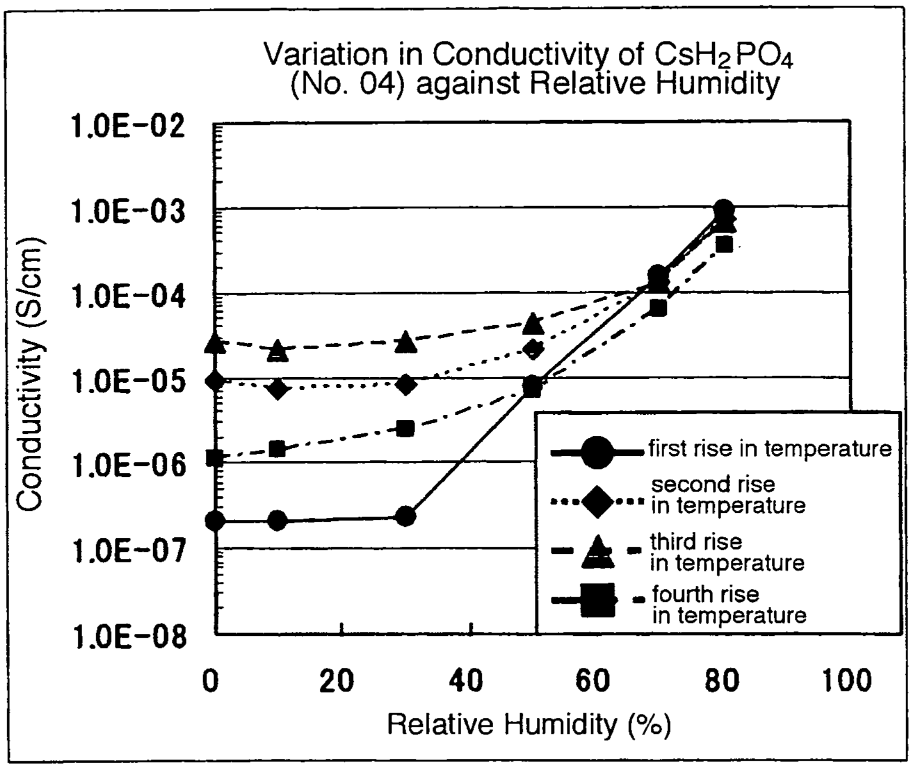
Variation in Conductivity of $CsH_2PO_4$ (No. 04) against Relative Humidity
Conductivity (S/cm)
1.0E-02
1.0E-03
1.0E-04
1.0E-05
1.0E-06
1.0E-07
1.0E-08
0
20
40
60
80
100
Relative Humidity (%)
first rise in temperature
second rise in temperature
third rise in temperature
fourth rise in temperature

**INTERNATIONAL SEARCH REPORT**

International application No.
PCT/JP2006/318201

A. CLASSIFICATION OF SUBJECT MATTER
*H01G9/025*(2006.01)i, *H01B13/00*(2006.01)i, *H01G9/032*(2006.01)i, *H01M8/02* (2006.01)i, *H01M8/10*(2006.01)i, *H01B1/06*(2006.01)n

According to International Patent Classification (IPC) or to both national classification and IPC

B. FIELDS SEARCHED

Minimum documentation searched (classification system followed by classification symbols)
H01G9/025, H01B13/00, H01G9/032, H01M8/02, H01M8/10, H01B1/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-537834 A (California Institute of Technology), 16 December, 2004 (16.12.04), Par. Nos. [0002] to [0006], [0019] & WO 2003/012894 A2 & EP 1423887 A | 1-9 |
| Y | JP 7-176313 A (Mitsubishi Heavy Industries, Ltd.), 14 July, 1995 (14.07.95), Par. Nos. [0002] to [0004] (Family: none) | 1-9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 December, 2006 (04.12.06) | Date of mailing of the international search report<br>19 December, 2006 (19.12.06) |
| Name and mailing address of the ISA/<br>Japanese Patent Office<br><br>Facsimile No. | Authorized officer<br><br>Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Nature,* 2001, vol. 410, 910-913
- *J. Mater, Sci. Lett.,* 1981, vol. 16, 2011-2016
- *Solid State Ionics,* 2000, vol. 136 (137), 229-241